# DEMANDE DE BREVET EUROPEEN

(11) **EP 3 187 830 A1**
(43) Date de publication de la demande: **05.07.2017**
(21) Numéro de dépôt: 16205113.0
(22) Date de dépôt: 19.12.2016
(51) Int. Cl.: G01D 4/00, G01D 5/30

(54) **CAPTEUR DE MESURE DE CONSOMMATION ELECTRIQUE, DE GAZ, DE CHALEUR OU D'EAU**

(30) Priorité: 24.12.2015 FR 1563306
(71) Demandeur: Engie, 92400 Courbevoie (FR)
(72) Inventeur: CALVEZ, Philippe, 78280 GUYANCOURT (FR); de CREVOISIER, Stanislas, 92300 LEVALLOIS PERRET (FR)
(74) Mandataire: Cabinet Netter

(57) **Abrégé**

Un capteur (1 ; 2) de mesure de consommation comprenant un support (3) agencé pour être fixé à un compteur de consommation (100), un photorécepteur (7) disposé sur le support (3) et agencé de manière à recevoir un faisceau de lumière (25) en provenance du compteur (100) dans une position opérationnelle du capteur (1 ; 2), et le convertir en un signal brut, un circuit électrique (73) relié au photorécepteur (7) et agencé pour transformer le signal brut en signal traité, un microcontrôleur (19) agencé pour recevoir le signal traité, pour en tirer une durée de saturation, et pour tirer des données de saturation une information de consommation mesurée par le compteur (100), et un émetteur (11) agencé pour émettre des données de consommation mesurée à partir des informations de consommations déterminées par le microcontrôleur (19).

## Description

L'invention concerne la gestion énergétique et en particulier un capteur de mesure de consommation électrique, de gaz, de chaleur ou d'eau.

La gestion énergétique, en particulier des bâtiments et logements, nécessite d'accéder à des informations de consommation fréquentes, régulières, voire en temps réel.

Pour accéder à ces informations, il est possible de remplacer les compteurs classiques par des compteurs communicants. La fabrication, l'installation et l'entretien des compteurs communicants sont coûteux. En outre, les phases de recherche, de développement et de déploiement de tels compteurs sont longues.

Pour remédier à ce problème, des systèmes de récupération des données de consommation par capteur optique ont été développées. Cependant, ces capteurs ont une consommation très importante qui impose un branchement à une alimentation électrique rarement disponible, ou l'utilisation de batteries dont l'autonomie n'excède pas un an. De plus, ces capteurs ne sont capables de réaliser des mesures que sur un seul type de compteur de consommation (électrique, de gaz de chaleur ou d'eau), voire ne sont compatibles qu'avec un unique modèle de compteur de consommation donné. Ils ne peuvent donc pas être utilisés à grande échelle pour des usages divers, et deviennent régulièrement obsolètes lorsque de nouveaux compteurs sont introduits.

L'invention vient améliorer la situation.

La Demanderesse propose un capteur de mesure de consommation comprenant :
- un support agencé pour être fixé à un compteur de consommation,
- un photorécepteur disposé sur le support et agencé de manière à recevoir un faisceau de lumière en provenance du compteur dans une position opérationnelle du capteur, et le convertir en un signal brut,
- un circuit électrique relié au photorécepteur et agencé pour transformer le signal brut en signal traité,
- un microcontrôleur agencé pour recevoir le signal traité, pour en tirer une durée de saturation, et pour tirer des données de saturation une information de consommation mesurée par le compteur, et
- un émetteur agencé pour émettre des données de consommation mesurée à partir des informations de consommations déterminées par le microcontrôleur.

Lorsqu'il est monté sur un compteur classique, un tel capteur permet de rendre n'importe quel compteur communicant et d'accéder à des informations de consommation en temps réel. Cette installation ne nécessite pas de modifier le compteur sur lequel le capteur est monté. Aucune autorisation spécifique de la part du fournisseur du compteur n'est donc nécessaire. En outre, la consommation électrique du capteur est si faible qu'une alimentation par batterie, par exemple à piles, suffit à assurer une autonomie de plus de deux ans. Enfin, l'installation comme le retrait du capteur sont aisés. L'occupant d'un logement peut donc installer le capteur sans avoir à faire appel à l'aide d'un professionnel.

De plus, transformer des compteurs classiques en compteurs communicants est très avantageux car les campagnes de déploiement des compteurs nativement communicants sont extrêmement longues - par exemple 6 ans pour la campagne en cours pour les compteurs électriques en France. Pendant ces périodes de déploiement, les avantages liés aux compteurs communicants sont inaccessibles. L'invention permet d'obtenir un compteur communicant sans campagne de déploiement spécifique, puisque l'utilisateur peut installer lui-même le capteur.

Dans diverses variantes, le capteur de l'invention pourra présenter une ou plusieurs des caractéristiques suivantes :
- Le capteur comprend en outre une source de lumière. La source de lumière et le photorécepteur sont conjointement positionnés et orientés de sorte que le photorécepteur capte un faisceau réfléchi sur le compteur de la lumière émise par la source de lumière, en position opérationnelle du capteur.
- La source de lumière comprend une diode électroluminescente.
- Le microcontrôleur regroupe les données de saturation contiguës temporellement en fonction de leur valeur pour former des vecteurs.
- Le microcontrôleur détermine une information de consommation à détection d'un vecteur associé à une durée de saturation inférieur à un seuil choisi.
- Le microcontrôleur détermine une information de consommation à détection d'un vecteur associé à une durée de saturation supérieure à un seuil choisi.
- Le microcontrôleur détermine une information de consommation en détectant un motif recherché dans une suite de vecteurs.
- Le photorécepteur est attaché de manière mobile par rapport au compteur entre une position opérationnelle et une position de relève dans laquelle des informations visuelles affichées sur le compteur sont observables par un opérateur.
- Le microcontrôleur est agencé pour détecter l'installation sur un compteur électronique, et pour désactiver en réponse la source de lumière.
- L'émetteur est agencé, pour émettre par diffusion mono directionnelle sans fil hors de phases de maintenance.

D'autres caractéristiques, détails et avantages de l'invention apparaîtront à la lecture de la description détaillée ci-après, et des dessins annexés, sur lesquels :
- la figure 1 est un schéma d'un premier capteur selon l'invention,
- la figure 2 est un schéma électrique d'une partie du capteur de la figure 1,
- la figure 3 représente un signal tiré du circuit de la figure 2,
- la figure 4 représente un diagramme de flux du fonctionnement du capteur de la figure 1,
- la figure 5 représente un diagramme de flux d'une opération de traitement du signal de la figure 3,
- la figure 6 représente un diagramme de flux du calcul de consommation pour le compteur de la figure 1,
- la figure 7 représente un diagramme de flux du calcul de consommation pour un compteur en variante, et
- la figure 8 représente un diagramme de flux du calcul de consommation pour un autre compteur en variante.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

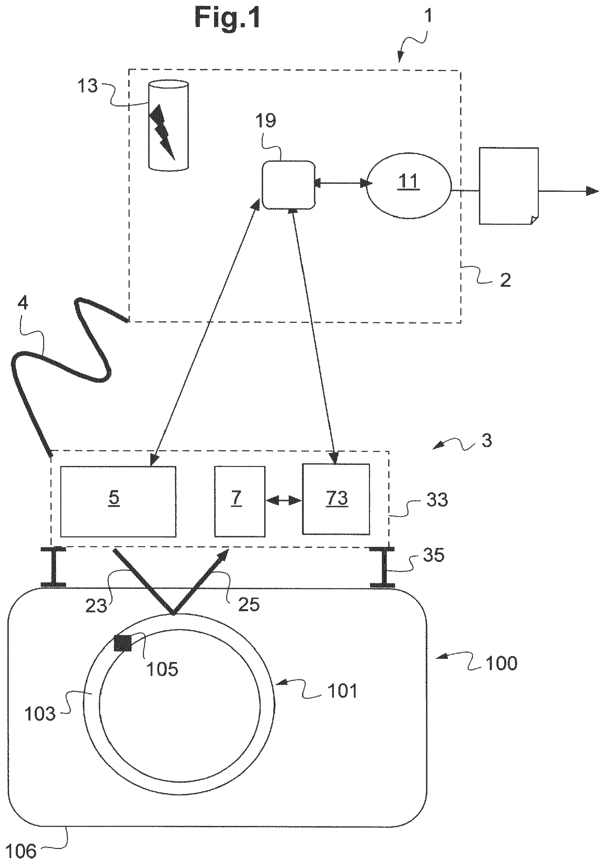

Il est fait référence à la figure 1 qui est un schéma d'un capteur 1 installé dans une position opérationnelle sur un compteur de consommation électrique 100. Le capteur 1 est prévu pour déterminer la consommation électrique mesurée par le compteur 100. Le compteur 100 est enfermé dans un boîtier 106.

Dans l'exemple décrit ici, le compteur 100 comprend un disque 101, ou roue, logé dans le boîtier 106. Une ouverture est ménagée dans le boîtier 106 en regard du disque 101 afin que ce dernier soit visible de l'extérieur. Ce type de compteur électromécanique est appelé « compteur Ferrari ». La figure 1 représente schématiquement une coupe du capteur 1 installé sur le boîtier 106 au niveau du disque 101.

Le capteur 1 comprend un corps 2 et une tête optique 3 reliée au corps 2 par un câble 4. Le corps 2 peut être disposé au voisinage du compteur 100, par exemple posé sur une face supérieure du boîtier 106.

La tête optique 3 inclut une partie mobile 33, ici sous la forme d'un boîtier, et une partie fixe 35, ici sous la forme d'un socle.

La partie fixe 35 de la tête optique 3 est fixée sur le boîtier 106 de sorte que, lorsqu'elle reçoit la partie mobile 33, cette dernière est sensiblement en regard du disque 101 dans une position opérationnelle du capteur 1.

Dans l'exemple décrit ici, le socle de la partie fixe 35 est collé par du ruban adhésif sur le boîtier 106, et la partie mobile 33 est reliée à la partie fixe 35 de manière amovible.

En variante, la partie mobile 33 peut être reliée à la partie fixe 35 par un pivot, des clips, des vis, une glissière ou encore des attaches à bouclettes et crochets de manière à rendre la partie mobile 33 déplaçable par rapport au boîtier 106 lorsque la partie fixe 35 est attachée à celui-ci. D'autres moyens de fixation de la partie fixe 35 au boîtier 106 peuvent également être utilisés comme des clips, ou des ventouses. En variante, le support 3 est dépourvu de partie mobile.

Dans la position opérationnelle du capteur 1, la tête optique 3 empêche l'observation d'une partie au moins du compteur 100. La partie mobile 33 peut être éloignée du disque 101 par un déplacement par rapport au boîtier 106 pour qu'un opérateur puisse continuer d'accéder à la partie obstruée par la tête optique 3, par exemple en la détachant de la partie fixe 35. Dans l'exemple décrit ici, le socle de la tête optique 3 est réalisé en un plastique à forte transparence, de sorte que celui-ci ne gêne pas le relevé visuel d'informations.

Dans le type de compteur de l'exemple décrit, le disque 101 tourne à une vitesse proportionnelle à la consommation instantanée mesurée. Le disque 101 présente une ou plusieurs marques qui permettent de mesurer cette rotation.

Ici, la périphérie du disque 101 présente une portion blanche 103 et une marque noire 105. La portion blanche occupe la totalité de la périphérie à l'exception de la marque noire 105, ce qui permet de déterminer que le disque 101 a réalisé une rotation et de déduire une quantité d'énergie mesurée par le compteur 100.

En variante, la portion blanche 103 et la marque noire 105 peuvent être remplacées par d'autres couples visuellement différenciables tels des parties réfléchissantes et absorbantes, des déformations locales ou encore des inscriptions telles que des chiffres.

Le capteur 1 comprend en outre une source de lumière 5, un photorécepteur 7, un circuit 73, un émetteur 11, une batterie 13 et un microcontrôleur 19.

Dans l'exemple décrit ici, la source de lumière 5, le photorécepteur 7 et le circuit 73 sont montés sur la partie mobile 33 de la tête optique 3. L'émetteur 11, la batterie 13 et le microcontrôleur 19 sont logés dans le corps 2. En variante, le circuit 73 pourrait être logé dans le corps 2, et l'émetteur 11, la batterie 13 et/ou le microcontrôleur 19 pourraient être logés dans la tête optique 3.

Ici, un logement et un connecteur sont ménagés dans le corps 2 et agencés pour recevoir la batterie 13, ou pile. La batterie 13 alimente la source de lumière 5, le photorécepteur 7, le circuit 73, l'émetteur 11 et le microcontrôleur 19. Le capteur 1 est ainsi autonome en énergie. Dans l'exemple décrit ici la batterie 13 comprend deux piles de type LR6 également désignées par le terme AA. Cela est très important car, grâce à l'invention, et avec une source d'énergie aussi simple que celle décrite ici, le capteur 1 peut présenter une autonomie de plus de deux ans. En effet, la Demanderesse a réussi grâce à ses travaux à réduire la consommation du capteur 1 entre 23 µA et 53 mA selon le type de mesure effectuée et les situations, tout en rendant ce capteur adaptable sur une grande variété de compteurs existants.

Dans la position opérationnelle, la source de lumière 5 émet un faisceau incident 21 vers le disque 101. Lorsque le faisceau incident 21 atteint le disque 101, il est en partie réfléchi sous la forme d'un faisceau réfléchi 23. La tête optique 3 est fixée sur le boîtier 106 de sorte que le faisceau incident 21 atteigne le disque, et que le faisceau réfléchi atteigne le photorécepteur 7. Sur la figure 1, le faisceau incident 21 et le faisceau réfléchi 23 sont représentés par deux portions de flèche.

La source de lumière 5 comprend ici une diode électroluminescente (LED). Cette dernière présente une faible consommation électrique. Dans l'exemple décrit ici, la source de lumière 5 émet des impulsions d'environ 250µs séparées généralement par une durée d'environ 250 ms, soit une fréquence d'émission impulsions d'environ 4 Hz. Ici, la source de lumière 5 est pilotée par le microcontrôleur 19 via le circuit électrique 73. De telles durées sont adaptées à la vitesse de rotation du disque 101 de sorte que la portion blanche 103, respectivement la marque noire 105, reçoit au moins une impulsion à chaque tour du disque 101. Ainsi, à chaque passage de la marque noire 105, au moins un faisceau réfléchi 23 correspondant est reçu par le photorécepteur 7.

Dans d'autres modes de réalisation, la durée des impulsions ainsi que la durée entre deux impulsions de la source de lumière 5 peuvent varier. De plus, ces durées pourront être adaptées par le microcontrôleur 19 au cours du fonctionnement ou au cours d'une phase d'initialisation comme décrit plus bas. En variante, la fréquence est constante, par exemple réglée en usine.

L'intensité du faisceau réfléchi 23 dépend de la surface sur laquelle le faisceau incident 21 est réfléchi. Lorsque le faisceau incident 21 est réfléchi sur une surface claire et/ou réfléchissante telle que la portion blanche 103, l'intensité du faisceau réfléchi 23 est forte. Lorsque le faisceau incident 21 est réfléchi sur une surface sombre et/ou absorbante telle que la marque noire 105, l'intensité du faisceau réfléchi 23 est faible.

La variation de l'intensité lumineuse reçue par le photorécepteur 7 permet donc de déterminer si la source de lumière 5 a illuminé la portion blanche 103 ou la marque noire 105 du disque 101, ce qui permet de connaître la consommation électrique mesurée par le compteur 100. Le photorécepteur 7 émet en sortie un signal électrique brut en réponse à son excitation par le faisceau réfléchi 23.

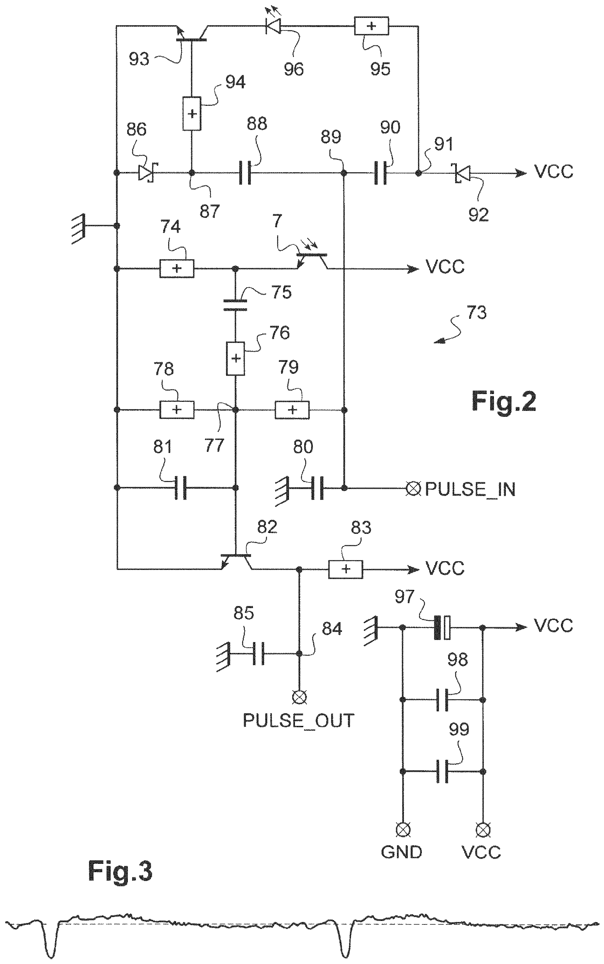

Le traitement du signal émis en sortie par le photorécepteur 7 est réalisé par le circuit électrique 73, qui sera décrit en référence à la figure 2.

Le circuit électrique 73 comprend une partie de réception et une partie d'émission.

La partie de réception comprend une première résistance 74 disposée entre une première borne du photorécepteur 7, formé ici d'un phototransistor, et la masse. La seconde borne du photorécepteur 7 est reliée à une borne d'alimentation VCC, ici de 3 volts. La partie de réception comprend en outre un premier condensateur 75 et une seconde résistance 76 branchés en série sur une branche qui s'étend d'entre le photorécepteur 7 et la première résistance 74 jusqu'à un premier noeud 77. Le premier noeud 77 est relié à la masse par l'intermédiaire d'une troisième résistance 78, et à l'alimentation VCC par l'intermédiaire d'une quatrième résistance 79. Un second condensateur 80 est disposé entre l'alimentation VCC et la masse. Un troisième condensateur 81 relie le premier noeud 77 à la masse, en parallèle de la troisième résistance 78. Le premier noeud 77 est relié à la base d'un premier transistor 82. Le collecteur du premier transistor 82 est relié à l'alimentation VCC par l'intermédiaire d'une cinquième résistance 83 tandis que l'émetteur du premier transistor 82 est relié à la masse. Un second noeud 84 situé entre le collecteur du premier transistor 82 et l'alimentation VCC est relié à la masse par l'intermédiaire d'un quatrième condensateur 85.

En fonctionnement, le photorécepteur 7 est polarisé entre l'alimentation VCC et la masse. À réception de lumière, un courant apparaît entre le collecteur et l'émetteur du phototransistor du photorécepteur 7. Ce courant est sensiblement proportionnel à la quantité de lumière reçue. Le courant généré pilote le premier transistor 82 par l'intermédiaire de sa base. La tension entre le collecteur et l'émetteur du premier transistor 82 forme alors un signal de sortie récupéré en une sortie PULSE_OUT du circuit 73 par le microcontrôleur 19. La sortie PULSE_OUT est située au second noeud 84. La sortie PULSE_OUT forme une entrée d'interruption pour le microcontrôleur 19. La première résistance 74 permet de régler l'intensité en fonction de divers phototransistors de manière à limiter l'effet de la dispersion sur la sensibilité.

Lorsque le photorécepteur 7 ne reçoit pas, ou trop peu, de lumière, la cinquième résistance 83 forme résistance de rappel et permet de maintenir le courant du signal de sortie en PULSE_OUT sensiblement équivalent à celui de l'alimentation VCC. Lorsque suffisamment de lumière est reçue par le photorécepteur 7, le courant à la base du premier transistor 82 ferme ce dernier. Le courant du signal de sortie en PULSE_OUT est alors sensiblement mis à la masse.

La partie d'émission du circuit électrique 73 comprend une branche qui relie la masse à l'alimentation VCC. Cette branche porte, de la masse jusqu'à l'alimentation VCC, une première diode Schottky 86 orientée de la masse vers l'alimentation VCC, un troisième noeud 87, un cinquième condensateur 88, un quatrième noeud 89, un sixième condensateur 90, un cinquième noeud 91 et une seconde diode Schottky 92 orientée de l'alimentation VCC vers la masse. Le troisième noeud 87 est relié à la base d'un second transistor 93 par l'intermédiaire d'une sixième résistance 94. L'émetteur du second transistor 93 est relié à la masse. Le cinquième noeud 91 est relié au collecteur du second transistor 93 par l'intermédiaire d'une septième résistance 95 et de la diode électroluminescente 96 montées en série, la diode électroluminescente 96 étant orientée depuis la septième résistance 95 vers le second transistor 93.

La diode électroluminescente 96, formant ici la source de lumière 5, est polarisée entre l'alimentation VCC et la masse. Le second transistor 93 pilote la diode électroluminescente 96 en la laissant ou non être alimentée. Le second transistor 93 est lui-même commandé via sa base reliée à une entrée de commande PULSE_IN. L'entrée de commande PULSE_IN est reliée à une sortie du microcontrôleur 19 de sorte que ce dernier pilote la partie d'émission du circuit 73. L'intensité du courant dans la diode électroluminescente 96 est limitée par la septième résistance 95. La première diode Schottky 86, le cinquième condensateur 88, le sixième condensateur 90 et la seconde diode Schottky 92 améliorent la compatibilité électromagnétique (CEM).

Un septième condensateur 97, un huitième condensateur 98 et un neuvième condensateur 99 sont montés respectivement en parallèle entre la masse et l'alimentation VCC.

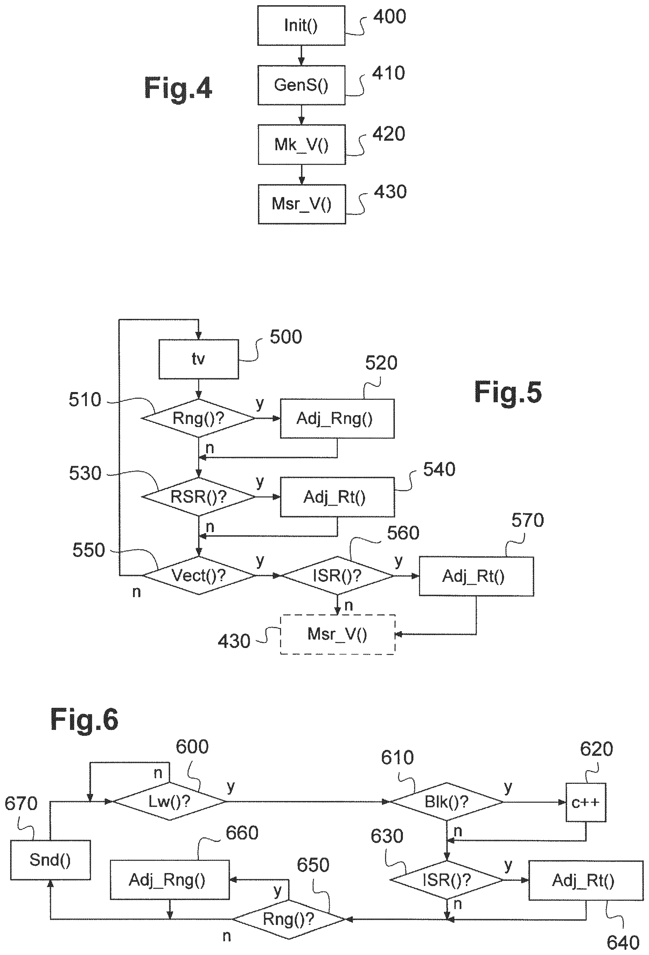

Dans l'exemple décrit ici, le signal traité prend la forme d'une tension dont la valeur varie au cours du temps avec l'intensité lumineuse reçue par le photorécepteur 7. Un exemple de la tension en fonction du temps correspondant au signal traité est représenté en figure 4. Lorsque la luminosité reçue dépasse la valeur de saturation du photorécepteur 7, alors la tension en sortie atteint un niveau maximum, ou tension de saturation.

Dans l'exemple de la figure 1, le microcontrôleur 19 est agencé pour piloter la source de lumière 5 et pour recevoir le signal traité en sortie 75 du circuit 73. Il envoie à l'émetteur 11 un nombre qui dépend du signal traité.

Le signal traité est ensuite interprété par le microcontrôleur 19 pour en tirer un signal de durée de saturation. En effet, contrairement aux capteurs connus, le capteur 1 ne cherche pas à tirer des informations directement du photorécepteur 7. Ainsi, lorsque le signal traité dépasse un seuil choisi, une interruption (au sens informatique) est déclenchée dans le microcontrôleur 19, jusqu'à ce que le signal sur la sortie 75 repasse en dessous du seuil choisi. C'est la durée entre ces deux interruptions qui constitue le signal utilisé par le microcontrôleur 19 pour déterminer la mesure de consommation du compteur 100.

Ainsi :
- entre deux impulsions, le signal traité sur la sortie 75 est nul, et rien ne se passe dans le microcontrôleur 19,
- si pendant une impulsion, la portion du disque en regard du capteur 1 est très réfléchissante (par exemple la portion blanche 103), alors le signal sur la sortie 75 va dépasser le seuil choisi pendant la quasi-totalité de l'impulsion, et le microcontrôleur 19 va en tirer une durée de saturation élevée,
- si pendant une impulsion, la portion du disque en regarde du capteur 1 n'est pas très réfléchissante (par exemple la marque noire 105), alors le signal sur la sortie 75 va être faible et ne va dépasser le seuil choisi que pendant une faible durée de l'impulsion, et le microcontrôleur 19 va en tirer une durée de saturation basse.

Le signal traité est donc transformé par le circuit 73 et le microcontrôleur 19 en échantillons représentant chacun la durée de saturation du photorécepteur 7.

La figure 3 représente un exemple de signal de durée de saturation dans le microcontrôleur 19 en fonction du temps. Sur ce schéma, les différentes durées de saturation sont représentées en ordonnées, et ordonnées temporellement en abscisse. Le trait en pointillé représente la valeur moyenne du signal.

Sur cette figure, on reconnaît bien le profil d'un compteur Ferrari : la plupart du temps, la durée de saturation est importante, puisque la portion blanche 103 forme la plus grande partie de la périphérie du disque 101, tandis que, localement, la durée de saturation s'effondre, au niveau de la marque noire 105.

Le capteur de l'invention est également compatible avec d'autres compteurs, comme les compteurs électroniques, dans lesquels le disque 101 peut être remplacé par une diode électro-luminescente (LED), ou toute autre source lumineuse, qui s'allume lorsqu'un cycle de consommation a lieu.

La figure 4 va maintenant être décrite afin de décrire schématiquement le fonctionnement du capteur 1.

Dans une opération 400, le microcontrôleur 19 initialise le capteur 1. Cette initialisation implique la détermination du type de compteur sur lequel le capteur 1 est installé. Cette détermination peut être automatisée ou manuelle. Par exemple, le capteur peut garder la source de lumière 5 éteinte pendant une durée déterminée afin de détecter si une lumière est émise par le compteur. Si c'est le cas, alors il s'agit d'un compteur électronique. Sinon, il s'agit d'un compteur électromécanique.

Une fois que le type de compteur est déterminé, le microcontrôleur 19 détermine les paramètres opérationnels pour la source de lumière 5 et/ou certains paramètres pour le circuit 73. Enfin, en fonction du type de compteur déterminé, le microcontrôleur 19 effectue des opérations d'initialisation de mesure qui seront décrites plus bas. Ensuite, dans une opération 410, le microcontrôleur 19 commande la source de lumière 5 pour émettre des impulsions de durée déterminée à intervalles déterminés en fonction des résultats de l'opération 400. Typiquement, les impulsions ont une durée de 250µs et sont espacées de 250ms. Cette commande par une fonction GenS(), génère sur la sortie 75 un signal traité qui est transformé par le microcontrôleur 19 en échantillons de durée de saturation, comme décrit plus haut.

Lorsque l'opération 400 détermine que le compteur est un compteur à LED, c'est-à-dire dépourvu de disque et qui émet une impulsion lumineuse à chaque fois qu'une quantité a été mesurée, la source de lumière 5 est désactivée, et le microcontrôleur 5 utilise directement les valeurs sortant de la sortie 75 pour déterminer la consommation mesurée par le compteur 100, et les autres opérations de la figure 4 ne sont pas exécutées. En effet, il n'y a pas de réflexion à mesurer, et chaque fois qu'une impulsion de la LED du compteur 100 est détectée, le signal sur la sortie 75 est à niveau élevé et suffit à déterminer la consommation mesurée.

Ensuite, dans une opération 420, le microcontrôleur 19 traite les échantillons pour les transformer en vecteurs. Les vecteurs sont les objets qui vont être utilisés pour déterminer la consommation mesurée par le compteur 100. Un vecteur donné regroupe une pluralité d'échantillons consécutifs qui sont considérés comme semblables. Cela permet par exemple de gérer le fait que la vitesse de rotation du disque du compteur 100 n'est pas constante, et que le signal de durée de saturation est tassé ou élargi en fonction de l'évolution de cette vitesse.

Pour cela, le microcontrôleur 19 exécute une fonction MkV() dont un exemple de réalisation va être décrit en référence à la figure 5.

La fonction MkV() est une boucle qui parcourt les échantillons au fur et à mesure qu'ils sont produits à l'opération 410. Tant que cette boucle détermine que les échantillons consécutifs sont suffisamment semblables, ceux-ci sont regroupés. Dès que ce n'est plus le cas, la fonction MkV() génère un vecteur qui représente les échantillons regroupés.

Ainsi, dans une opération 500, un échantillon tv est reçu. Dans une opération 510, une opération Rng() détermine si une plage dynamique doit être modifiée. En effet, la valeur du signal de durée de saturation des échantillons est convertie en valeur sur 16 bits dans l'exemple décrit ici pour réaliser les calculs. Il faut donc maintenir une plage dynamique qui représente la valeur la plus importante et la valeur la moins importante détectées pour les échantillons tv afin de faire cette conversion.

Lorsqu'un nouvel échantillon tv présente une valeur de signal de durée de saturation supérieure à la valeur maximale ou inférieure à la valeur minimale de la plage dynamique, celle-ci est mise à jour par une fonction Adj_Rng() dans une opération 520. La fonction Adj_Rng() peut également tenir compte d'une évolution du signal de durée de saturation. Par exemple, si tous les échantillons tv ont une valeur importante et que subitement une valeur plus basse que la valeur minimale est détectée, la fonction Adj_Rng() peut ignorer cet échantillon en considérant qu'elle correspond à une mesure accidentelle ou bruitée.

Ensuite, dans une opération 530, le microcontrôleur 19 exécute une fonction RSR() pour déterminer si la fréquence des impulsions doit être diminuée. En effet, lorsque le disque tourne très lentement, un grand nombre d'échantillons vont être émis en rapport à une même zone du disque, ce qui n'a pas d'intérêt et consomme beaucoup d'énergie. Par conséquent, lorsque la fonction RSR() détermine qu'un vecteur en cours de définition contient un nombre élevé d'échantillons, par exemple 1024, une fonction Adj_Rt() est exécutée dans une opération 540 pour diminuer la fréquence des impulsions.

Ensuite, dans une opération 550, une fonction Vect() compare l'échantillon tv aux autres échantillons du vecteur en cours de définition. Dans l'exemple décrit ici, la fonction Vect() détermine si la dérivée du signal de durée de saturation associé à l'échantillon tv a changé de signe. Cette détermination tient compte d'un niveau de bruit estimé, afin de ne pas définir le vecteur à cause d'une variation de signal due au bruit, par exemple la lumière émise à 50Hz pour l'éclairage électrique.

Si c'est le cas, alors le vecteur est défini, et comprend le nombre d'échantillons qui le composent, ainsi que la valeur de durée de saturation du dernier échantillon, convertie sur la plage dynamique. Si ce n'est pas le cas, alors la boucle reprend avec l'opération 500 et la réception d'un nouvel échantillon tv.

Une fois le vecteur défini, le microcontrôleur 19 exécute une fonction ISR() dans une opération 560. La fonction ISR() est similaire à la fonction RSR(), mais en inverse : le but est de déterminer si le disque ne tourne pas trop vite par rapport à la fréquence des impulsions. Si c'est le cas, par exemple si un vecteur ne contient qu'un nombre faible d'échantillons (par exemple 40 points), alors la fonction Adj_Rt() est exécutée dans une opération 570 afin d'augmenter la fréquence des impulsions par la source de lumière 5.

Ensuite, l'opération 420 se termine, et le microcontrôleur 19 exécute une fonction Msr_V() dans une opération 430. La fonction Msr_V() utilise les vecteurs générés à l'opération 420 pour déterminer si le compteur a mesuré un cycle de consommation.

Les figures 6 à 8 représentent trois exemples de mise en oeuvres possibles pour la fonction Msr_V(), chacune adaptée à un type de compteur.

Ainsi la figure 6 représente un exemple de mise en oeuvre de la fonction Msr_V() adaptée aux compteurs Ferraris, comme celui de la figure 1.

Dans ce type de compteur, la mesure par le compteur est, comme on l'a décrit plus haut, restituée par un disque dont la vitesse de rotation varie en fonction de la consommation mesurée. Le disque présente une périphérie entièrement blanche, à l'exception d'une marque noire, qui permet donc de déterminer que le disque a achevé une rotation.

Pour ce type de compteur, le but de la fonction Msr_V() est donc de détecter le signal relation à la marque noire. Comme on peut le voir sur la figure 3, ce signal est distinct, car il génère une grosse chute dans la valeur du signal de durée de saturation.

Dans cet exemple, la fonction Msr_V() vise donc à déterminer une transition vecteur à signal élevé ou « vecteur haut » vers vecteur à signal faible ou vecteur bas.

Pour cela, à l'initialisation du capteur 1, le microcontrôleur 19 observe une quantité choisie de vecteurs (par exemple 400), et détermine sur ce jeu de vecteurs une valeur de vecteur indiquant la transition entre un vecteur haut et un vecteur bas.

Ensuite, ces vecteurs sont analysés avec la fonction Msr_V() pour ne pas perdre de données. La fonction Msr_V() repose donc sur la détermination d'un vecteur bas suivant un vecteur haut. Pour cela, chaque vecteur est testé par une fonction Lw() dans une opération 600, pour comparer sa valeur à la valeur de vecteur bas. Cette fonction boucle jusqu'à trouver un vecteur satisfaisant.

Si c'est le cas, dans une opération 610, une fonction Blk() est exécutée pour vérifier que le vecteur correspond bien à une marque noire. En effet, un vecteur peut présenter une valeur basse en rapport à un changement de conditions ambiantes, ou à une baisse d'alimentation ou autre, sans pour autant correspondre à une marque noire. La fonction Blk() compare donc la valeur du vecteur à celle des derniers vecteurs pour déterminer si elle en est suffisamment éloignée.

Si c'est le cas, alors dans une opération 620, un compteur de cycle c est incrémenté. Le compteur c contient ainsi en permanence le nombre de tours détectés pour le disque 101.

Ensuite, dans des opérations 630 et 640, le nombre d'échantillons des vecteurs entre le dernier cycle détecté et le cycle qui vient d'être détecté est testé pour ajusté la fréquence d'échantillonnage (c'est-à-dire la fréquence des impulsions de la source de lumière 5), de manière similaire à ce qui a été décrit avec les opérations 560 et 570 de la figure 5. Dans l'exemple décrit ici, l'opération 640 est légèrement différente, en ce qu'elle impose la fréquence d'échantillonnage la plus élevée. Bien que cela induise une légère surconsommation instantanée, cela garantit qu'aucun cycle ne sera raté. De plus, si cette fréquence est trop élevée, est sera rapidement réduite par l'opération 420.
Ensuite, dans une opération 650, la fonction Rng() est exécutée ensemble avec la fonction Adj_Rng() dans une opération 660, comme cela a été décrit avec la figure 5.

Cela permet de s'assurer que la plage dynamique est toujours adaptée au signal mesuré, et augmente la fiabilité de la détection.

Enfin, une fonction Snd() est exécutée dans une opération 670. Cette fonction commande une émission par l'émetteur 11 de données. L'émetteur 11 est relié en sortie du microcontrôleur 19. L'émetteur 11 est agencé pour transmettre un signal dans l'air (sans fil) représentant le nombre de cycles c. Cette transmission est monodirectionnelle. Dans l'exemple décrit ici, le microcontrôleur 19 envoie un nombre à l'émetteur 11, par exemple une fois par minute environ. Un récepteur distinct du capteur 1 peut alors capter le signal transmis par l'émetteur 11 pour déterminer des informations de consommation. La mise en oeuvre d'une transmission monodirectionnelle permet une consommation électrique du capteur 1 particulièrement faible. De plus, comme l'émetteur 11 envoie la valeur c, le signal présente une forme intrinsèque de redondance, et même si un envoi est perdu, le suivant permettra de compenser cette perte. Comme on l'a décrit, l'émission est périodique. Aussi, la fonction Snd() détermine si la période est échue, et commande l'envoi par l'émetteur 11 le cas échéant. D'autres variantes pourront être envisagées.

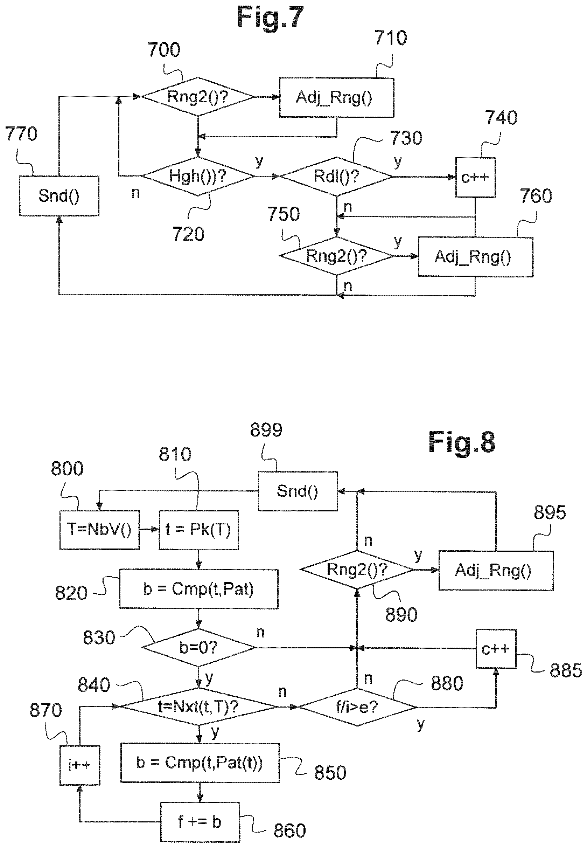

Les figures 7 et 8 représentent des variantes de mise en oeuvre de la fonction Msr_V(). En effet, certains compteurs ne comportent pas de disque comme les compteurs Ferraris, mais une pluralité de rouleaux à chiffres qui représentent directement la consommation mesurée. Dans ces compteurs, seul le rouleau représentant la plus petite unité est entraîné par la mesure, et les autres rouleaux sont incrémentés en conséquence. Par exemple, le rouleau entrainé représente une mesure de type « dixième ». Lorsqu'il fait un tour, il entraîne le rouleau des unités. Lorsque le rouleau des unités fait un tour, il entraîne le rouleau des dizaines, etc. Dans ce type de compteur, le rouleau entraîné présente donc les chiffres 0 à 9 sur sa périphérie, en général en blanc sur fond noir.

Dans certains cas, par exemple des compteurs de gaz, le rouleau entraîné présente en outre une portion réfléchissante, par exemple au niveau des chiffres 0, 6, 8 ou 9. La figure 7 représente un exemple de mise en oeuvre d'une fonction Msr_V() adaptée à ce type de compteur.

Cette situation est assez similaire à celle du compteur Ferrari : on cherche à détecter un évènement très différent de la plupart des évènements. Dans le cas du compteur Ferrari, il s'agit de détecter une marque noire, alors qu'ici il s'agit de détecter une réflexion (due à la portion réfléchissante), beaucoup plus brillante que la réflexion due aux portions noires et blanches définissant les chiffres. L'initialisation est similaire à celle des compteurs Ferraris.

La principale différence réside dans le fait que la plage dynamique doit être maîtrisée, afin de s'assurer que la portion blanche des chiffres n'est pas détectée comme une réflexion, et que la portion réfléchissante est bien détectée par rapport à la portion blanche.

Ainsi, la fonction Msr_V() commence par des opérations 700 et 710 dans lesquelles une fonction Rng2() similaire à la fonction Rng() déjà décrite et la fonction Ad_Rng() sont exécutées. Ici, la fonction Rng2() détermine si le nombre de vecteurs depuis le dernier cycle détecté dépasse une quantité attendue. Si c'est le cas, alors c'est vraisemblablement dû au fait que la plage dynamique est inadaptée et que la portion réfléchissante est mal détectée.

Ensuite, dans une opération 720, une fonction Hgh() détermine si le vecteur courant dépasse le seuil et si le précédent vecteur dépassait également le seuil. Ainsi, si la portion réfléchissante reste longtemps en face du capteur, un seul cycle est déterminé.

Si ce n'est pas le cas, alors la fonction Msr_V() traite le vecteur suivant. Sinon, dans une opération 730, une fonction Rdl() détermine si le vecteur présente une valeur qui dépasse une valeur seuil associée à la portion réfléchissante, par exemple supérieure à la valeur maximale de la plage dynamique.

Si c'est le cas, alors le compteur de cycles c est incrémenté dans une opération 740. Sinon, la fonction Rng2() et la fonction Adj_Rng() sont à nouveau exécutées dans des opérations 750 et 760 pour déterminer si la plage dynamique doit être réajustée. En effet, si celle-ci est mal réglée, des portions blanches des chiffres peuvent déclencher l'incrémentation du compteur de cycles. Mais cela se verra rapidement car de nombreux cycles apparaîtront de manière rapprochée. Dans ce cas, la fonction Adj_Rng() corrigera ce problème et les vecteurs correspondants seront retraités. Enfin, la fonction Snd() est exécutée dans une opération 770, comme pour l'opération 670.

Dans d'autres cas, par exemple des compteurs de gaz ou d'eau, le rouleau entraîné ne présente pas de portion réfléchissante. La figure 8 représente un exemple de mise en oeuvre d'une fonction Msr_V() adaptée à ce type de compteur.

Dans ce cas, pendant l'initialisation, le microcontrôleur 19 va analyser les vecteurs consécutifs afin de détecter un motif. Une fois que ce motif a été déterminé, il va comparer les nouveaux vecteurs par groupe, afin d'essayer d'identifier ce motif dans les nouveaux vecteurs.

Pour cela, dans une opération 800, le microcontrôleur 19 exécute une fonction NbV() dans laquelle un nombre suffisant de vecteurs est accumulé pour former un tableau T dans lequel le motif va être recherché.

Ensuite, une boucle commence dans laquelle le tableau t est progressivement parcouru. Afin d'optimiser les résultats, ce parcours commence dans une opération 810 par l'exécution d'une fonction Pk() qui parcourt le tableau T pour trouver le vecteur qui présente la valeur la plus importante. Cela permet de commencer par un point caractéristique fort du motif, ce qui améliore la qualité de détection.

Ensuite, le vecteur t issu de l'opération 820 est comparé avec le motif déterminé pendant l'initialisation. Cette comparaison est réalisée par une fonction Cmp(), qui cherche à trouver dans le motif un vecteur dont la valeur est proche de celle du vecteur t en entrée, à un emplacement similaire à celui de t dans le tableau T.

Ainsi, la fonction Cmp() va chercher le vecteur v du motif qui a le même indice que le vecteur t dans le tableau T, et les comparer. Si leurs valeurs sont éloignées, par exemple différentes de plus de 1% lorsque converties selon la plage dynamique, alors la fonction Cmp() va comparer les valeurs des vecteurs immédiatement voisins du vecteur v dans le motif, par exemple les trois vecteurs qui suivent le vecteur v. Si l'un de ces vecteurs présente une valeur proche de celle du vecteur t, alors la fonction Cmp() retourne une valeur b égale à 0. Sinon, elle retourne une valeur b égale à 1.

Ensuite, dans une opération 830, un test détermine si l'opération 820 a trouvé un vecteur satisfaisant. Si c'est le cas, alors le reste du tableau T est parcouru pour déterminer si la séquence de vecteurs issue de l'opération 800 correspond au motif.

Ainsi, dans une opération 840, une fonction Nxt() parcourt le tableau T pour trouver le premier vecteur qui est suffisamment différent du vecteur t. Par exemple, il faut que ce vecteur présente une valeur différant d'au moins 1% par rapport au vecteur t.

Ensuite, ce vecteur est recherché dans le motif en exécutant la fonction Cmp() dans une opération 850, et le résultat b est ajouté à un compteur f dans une opération 860. Ainsi, le compteur f stocke toutes les occurrences de vecteurs de T qui n'ont pas été retrouvés dans le motif. Un compteur i est ensuite incrémenté dans une opération 870, et l'opération 840 est répétée, jusqu'à ce que tout le tableau T ait été parcouru.

Une fois que le tableau T a été parcouru, le rapport entre le compteur f et le compteur i est calculé dans une opération 880. Ce rapport indique le pourcentage de vecteurs du tableau T qui n'ont pas été retrouvés dans le motif. Si ce rapport dépasse une erreur e, par exemple 20%, alors il est considéré que le motif n'a pas été reconnu dans le tableau T.

Si le motif a été reconnu, alors le compteur de cycles c est incrémenté dans une opération 885. Sinon, après l'opération 885, ou lorsque l'opération 830 a indiqué un échec de l'opération 820, les fonctions Rng2() et Adj_Rng() déjà décrites sont exécutées dans des opérations 890 et 895, afin d'ajuste la plage dynamique si nécessaire. Enfin la fonction Snd() est exécutée dans une opération 897.

Dans ce qui précède, il apparaît que la figure 4 est une boucle continue pour les opérations 410 à 430. Le microcontrôleur 19 génère en permanence des échantillons avec l'opération 410, puis les transforme en vecteurs dans l'opération 420 et détermine la consommation dans l'opération 430.

Comme cela ressort de ce qui précède, le capteur de l'invention est donc compatible avec une quantité extrêmement importante de compteurs, ce qui est totalement inédit. De plus, sa conception lui permet de présenter une consommation électrique très réduite, qui lui offre une autonomie très importante, tout en utilisant des piles du commerce.

L'invention ne se limite pas aux exemples de capteurs décrits ci-avant, seulement à titre d'exemple, mais elle englobe toutes les variantes que pourra envisager l'homme de l'art dans le cadre des revendications ci-après.

## Revendications

1. Capteur (1 ; 2) de mesure de consommation comprenant :
- un support (3) agencé pour être fixé à un compteur de consommation (100),
- un photorécepteur (7) disposé sur le support (3) et agencé de manière à recevoir un faisceau de lumière (25 ; 26) en provenance du compteur (100 ; 102) dans une position opérationnelle du capteur (1 ; 2), et le convertir en un signal brut,
- un circuit électrique (73) relié au photorécepteur (7) et agencé pour transformer le signal brut en signal traité,
- un microcontrôleur (19) agencé pour recevoir le signal traité, pour en tirer une durée de saturation, et pour tirer des données de saturation une information de consommation mesurée par le compteur (100), et
- un émetteur (11) agencé pour émettre des données de consommation mesurée à partir des informations de consommations déterminées par le microcontrôleur (19).

2. Capteur (1) selon l'une des revendications précédentes, comprenant en outre une source de lumière (5), la source de lumière (5) et le photorécepteur (7) étant conjointement positionnés et orientés de sorte que le photorécepteur (7) capte un faisceau réfléchi (25) sur le compteur (100) de la lumière émise par la source de lumière (5), en position opérationnelle du capteur (1).

3. Capteur (1) selon la revendication 3, dans lequel la source de lumière (5) comprend une diode électroluminescente.

4. Capteur (1) selon la revendication 2 ou 3, dans lequel le microcontrôleur (19) regroupe les données de saturation contiguës temporellement en fonction de leur valeur pour former des vecteurs.

5. Capteur (1) selon la revendication 4, dans lequel le microcontrôleur (19) détermine une information de consommation à détection d'un vecteur associé à une durée de saturation inférieur à un seuil choisi.

6. Capteur (1) selon la revendication 4, dans lequel le microcontrôleur (19) détermine une information de consommation à détection d'un vecteur associé à une durée de saturation supérieure à un seuil choisi.

7. Capteur (1) selon la revendication 4, dans lequel le microcontrôleur (19) détermine une information de consommation en détectant un motif recherché dans une suite de vecteurs.

8. Capteur (1 ; 2) selon l'une des revendications précédentes, dans lequel le photorécepteur (7) est attaché de manière mobile par rapport au compteur (100 ; 102) entre une position opérationnelle et une position de relève dans laquelle des informations visuelles affichées sur le compteur (100) sont observables par un opérateur.

9. Capteur (1 ; 2) selon l'une des revendications précédentes, dans lequel le microcontrôleur (19) est agencé pour détecter l'installation sur un compteur (100) électronique, et pour désactiver en réponse la source de lumière (5).

10. Capteur (1 ; 2) selon l'une des revendications précédentes, dans lequel l'émetteur (11) est agencé, pour émettre par diffusion mono directionnelle sans fil hors de phases de maintenance.
